# EUROPEAN PATENT APPLICATION

(11) **EP 2 637 075 A1**
(43) Date of publication of application: **11.09.2013**
(21) Application number: 12198798.6
(22) Date of filing: 21.12.2012
(51) Int. Cl.: G06F 1/32, H04W 52/02

(54) **Management methods and related computer systems and machine-readable storage mediums using the same**

(30) Priority: 06.03.2012 TW 101107417
(71) Applicant: Acer Incorporated, Taipei Hsien 221 (TW)
(72) Inventor: Jiang, Shu-Yu, 221 Hsichih, Taipei Hsien (TW); Lin, Yung-Sen, 221 Hsichih, Taipei Hsien (TW)
(74) Representative: 2K Patentanwälte Blasberg Kewitz & Reichel

(57) **Abstract**

Management methods for use in a computer system including a wireless module and a processing unit which are turned off are provided. The wireless module is activated to scan at least on access point (AP) to obtain a scanning result during each count period, the processing unit being turned off during performing scanning. Thereafter, the wireless module determines whether to activate the processing unit to wake up the computer system to download update data from a network according to scanning result and predetermined setting. When scanning result does not match with predetermined setting or no update data is to be downloaded from network, the processing unit and the wireless module are turned off. When scanning result matches predetermined setting and an update data is available to be downloaded, the processing unit is activated to wake up the computer system to download update data from network.

## Description

### CROSS REFERENCE TO RELATED APPLICATIONS

This Application claims priority of Taiwan Application No. 101107417, filed on Mar. 6, 2012, the entirety of which is incorporated by reference herein.

### BACKGROUND OF THE INVENTION

### Field of the Invention

The disclosure relates generally to computer systems and related management methods and, more particularly to computer systems with wireless modules and related management methods.

### Description of the Related Art

Recently, with the vigorous development of network applications, the opportunity for users to acquire information through a network has become greatly increased. Users may perform a lot of services and applications using electronic devices such as computer systems, portable devices and so on via the appropriate application over the network. Traditionally, when users need to use these network services, they must first connect directly to the network via the electronic device or connect to the Internet through a wired or wireless access point (AP). Generally, for applications that connect to the Internet via the AP, users who are logged on to the operating system and ready to establish a network connection may request to connect with the previously connected AP in priority. If the previously connected AP cannot be connected successfully, the operating system will search for other available AP around the AP and determine whether or not the searched AP is in a AP list under its maintenance, and a connection link is established through this AP only when it is in its AP list.

Generally, electronic devices such as computer systems may enter standby or sleep mode for power-saving purposes. However, users must wait a long time for the computer system to resume from sleep mode and re-enter normal mode to establish a network connection. The computer system may be periodically woken up during each count period set by a timer. After the computer system resumes from the standby mode, its central processing unit (CPU) runs the operating system (OS) and then scans the adjacent wireless network. When the scanning result matches one of the APs in the AP list, the computer system will attempt to establish a connection with this AP and access the updated network content through this AP. When the scanning result does not match any AP in the AP list, the computer system will return to standby mode.

However, if the scanning result matches one of the APs in the AP list, the computer system may still be woken up to attempt to establish a connection with this AP even if no network content is to be updated in the network. Thus, the computer system may consume power to wake up but nothing can be done, resulting in unnecessary power consumption.

### BRIEF SUMMARY OF THE INVENTION

Computer systems and management methods using the same are provided.

In an embodiment, a management method for use in a computer system including a wireless module and a processing unit are provided. The wireless module and the processing unit are turned off. First, the wireless module is activated to scan at least one access point (AP) to obtain a scanning result during each count period, wherein the processing unit is turned off during performing the scanning. Thereafter, the wireless module determines whether to activate the processing unit to wake up the computer system to download an update data from a network according to the scanning result and a predetermined setting. When the scanning result does not match with the predefined setting or no update data is available to be downloaded from the network, the processing unit and the wireless module are turned off. When the scanning result matches the predetermined setting and an update data is to be downloaded, the processing unit is activated to wake up the computer system to download the update data from the network.

Another embodiment of a computer system at least comprises a wireless module, a timer and a processing unit. The wireless module has a microprocessor and a radio frequency (RF) module. The timer activates the wireless module to scan at least one access point (AP) to obtain a scanning result through the RF module duirng each count period. The processing unit is turned off and can wake up the computer system to download an update data from a network. Wherein, the microprocessor determines whether to activate the processing unit to wake up the computer system to download an update data from a network according to the scanning result and a predetermined setting, wherein when the scanning result does not match the predetermined setting or no update data is available to be downloaded from the network, the microprocessor does not activate the processing unit, and when the scanning result matches the predetermined setting and an update data is to be downloaded, the processing unit activates the processing unit to wake up the computer system to download the update data from the network.

Management methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of an operation environment of the invention;

Fig. 2 is a flowchart of an embodiment of a management method of the invention;

Fig. 3 is a schematic diagram illustrating another embodiment of an operation environment of the invention; and

Fig. 4 is a flowchart of another embodiment of a management method of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

Embodiments of the invention provide computer systems and power management methods thereof, which can turn on the power of the processing unit to connect to the network only when the network update is needed, thereby effectively reducing power consumption.

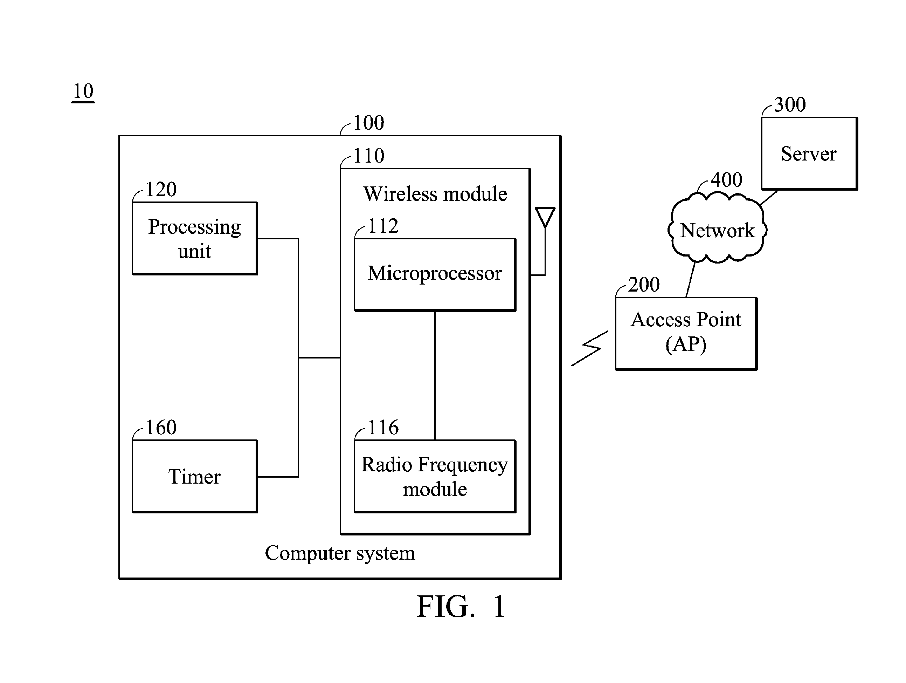

Fig. 1 is a schematic diagram illustrating an embodiment of an operation environment of the invention. As shown in Fig. 1, the operation environment 10 comprises a computer system 100 of the invention, an AP 200 and a network 400. The computer system 100 can connect to the AP 200 and connect to a server 300 in the network 400 through the AP 200. The server 300 connects to the network 400 for storing any update data of network content from the network 400. The computer system 100 comprises at least a wireless module 110, a processing unit 120 and a timer 160. The processing unit 120 may control the wireless module 110 to establish a connection with at least one AP 200 and obtain updated network content from the server 300. The wireless module 110 further comprises a microprocessor 112 and a radio frequency (RF) module 116.

The processing unit 120 is turned off and can be activated to wake up the computer system 100 to download an update data from a network 400. The microprocessor 112 may determine whether to activate the processing unit 120 according to a scanning result and predetermined determination/setting data so as to wake up the computer system 100 to download the update data from the network 400. The predetermined determination/setting data may comprise at least one of wireless AP setting data, Internet Protocol (IP) setting data and computer-hardware setting data corresponding to the computer system 100, but it is not limited thereto. For example, the predetermined setting may be the wireless AP setting data, the IP setting data and/or the computer system setting data. Note that the wireless AP setting data may comprise AP-related data, such as the SSID, the MAC address, the signal strength, the country code, the channel data, the security data, the authentication data of the AP and so on. The IP setting data may be IP-address data, such as the IP addresses of the DHCP server, the DNS server, the WINS server, the gateway, the subnet mask and so on. The computer system setting data may be data related to a timer-triggered event schedule, the power status of the battery, the temperature, the time (e.g. data indicating whether it is a working hour or a non-working hour), the system status (e.g. whether the power state of the system is in S3/S4/S5 state of the Advanced Configuration Power interface (ACPI)), the location information (which may distinguish whether the computer system is being used indoors or outdoors) and so on. The above-mentioned determination/setting data may assist in the subsequent determination of whether to turn on the power of the processing unit 120 such that the processing unit 120 starts connecting to the AP. The RF module 116 may receive data from the AP 200 and transmit data to the AP 200. The RF module 116 may be any wireless communication modules, such as blue-tooth communication modules, WiFi or 3G communication modules or WLAN communication modules in compliance with IEEE 802.1X standard, for connecting to responsive wired or wireless AP 200 to connect to the network 400 via the connected AP such that the computer system 100 may access resources on the connected network 400, e.g. the update data in the server 300 of the network 400. The AP 200 is connected to the network 400 and thus may obtain data to be updated from the server 300 via the AP 200. The network 400 may comprise, for example, wired or wireless networks, such as the Internet, WiFi or 3G wireless networks, but the invention is not limited thereto. The computer system 100 may establish a connection link with the AP 200 through the RF module 116 to connect to the network 400 and access data from the network 400. For example, if the network 400 is the Internet and the AP 200 is compatible with the IEEE802.11a standard, then the RF module 116 is a WLAN communication module compatible with the IEEE802.11a standard and the computer system 100 may establish a connection link with the AP 200 in the wireless network and perform wireless communication through the corresponding wireless module, and then connect to the Internet at its back-end via the AP 200.

The microprocessor 112 can perform the management method of the present invention. To be more specific, the microprocessor 112 can control the RF module 116 to perform a connection scan for scanning whether a connection with at least one AP can be successfully established to connect to the network (e.g. the Internet) 400 and confirm that whether any updated network content data exists in the server 300 of the network 400 after the connection has been successfully established. In addition, the microprocessor 112 may obtain predetermined setting related to the computer system and setting data related to the network for subsequent determination. When the scanning result does not match the predetermined setting or no update data is available to be downloaded from the network 400, the microprocessor 112 does not activate the processing unit 120. Contrarily, when the scanning result matches the predetermined setting and an update data is to be downloaded, the microprocessor 112 activates the processing unit 120 to wake up the computer system 100 to download the update data from the network 400.

The timer 160 may configure a count period (e.g. a sleep cycle) and may activate the wireless module 110 to perform a scanning for scanning the at least one AP 200 to obtain a scanning result through the RF module 116 in each count period reached.

In the present invention, each time the count period is completed, only the wireless module 110 will be woken up to perform the management method of the invention and the power of the processing unit 120 is only turned on to download update data from the network 400 only if the specific condition has been met, thus reducing the system power consumption and achieving the goal of saving power. The responsive management method will be discussed further in the following paragraphs.

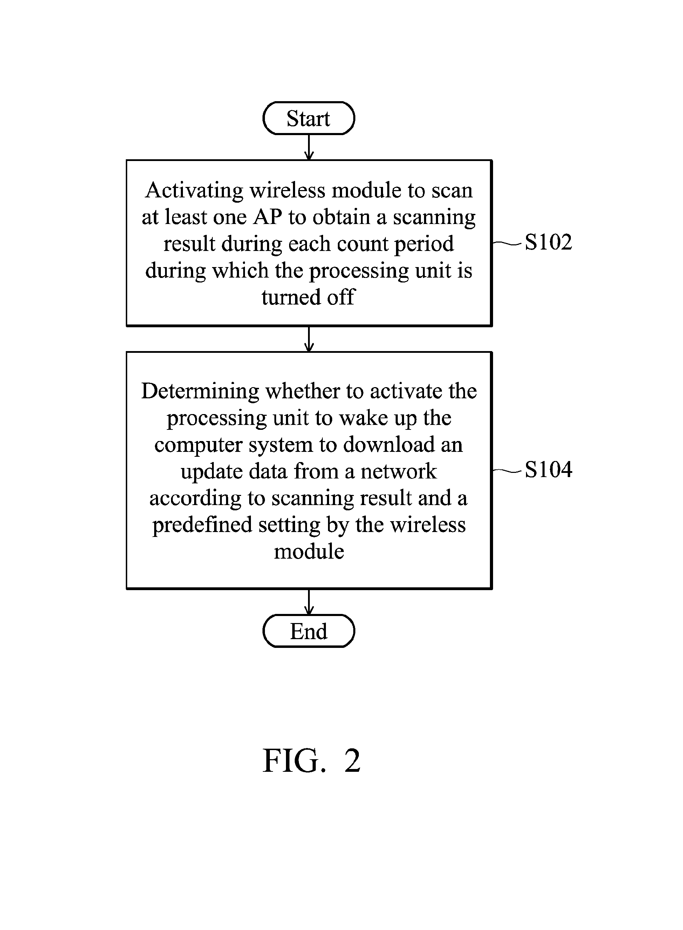

Fig. 2 is a flowchart of an embodiment of a management method of the invention. Please refer to Figs. 1 and 2. The management method can be applied to the computer system 100 for automatically managing whether to wake up the processing unit to perform a network content updating operation. In this embodiment, it is assumed that the computer system 100 is operating in a standby, sleep or power-off state and thus powers of the wireless module 110, the processing unit 120, and so on have been turned off.

First, in step S102, during each count period set by the timer 160, the wireless module 110 is activated to scan at least one AP 200 to obtain a scanning result. In other words, the wireless module 110 receives power so that the wireless module 110 is activated and can operate normally. Thereafter, the microprocessor 112 of the wireless module 110 starts performing a scan for scanning all of the APs listed in the preferred AP list and obtaining a scanning result. To be more specific, the preferred AP list may record data related to multiple APs that the user has been connected to and that have been added to preferred AP list, and the lower the value of its priority is, the higher its priority will be. Therefore, the AP with the lowest priority will be the first one selected for connection. When performing the scan, the microprocessor 112 may sequentially select the APs in the preferred AP list to connect based on the values of priority of the APs in ascending order. Meanwhile, the power of the processing unit 120 is still turned off.

After obtaining a scanning result, in step S104, the wireless module 110 determines whether to activate the processing unit 120 to wake up the computer system 100 to download an update data from the network 400 according to the scanning result and a predetermined setting. As aforementioned, the predetermined setting may comprise at least one of: a wireless AP setting data, an IP setting data and a computer-hardware setting data corresponding to the computer system 100, but it is not limited thereto. When the scanning result does not match the predetermined setting or no update data is available to be downloaded from the network 400, the microprocessor 112 does not activate the processing unit 120. Contrarily, when the scanning result matches the predetermined setting and an update data is available to be downloaded, the microprocessor 112 activates the processing unit 120 to wake up the computer system 100 to download the update data from the network 400.

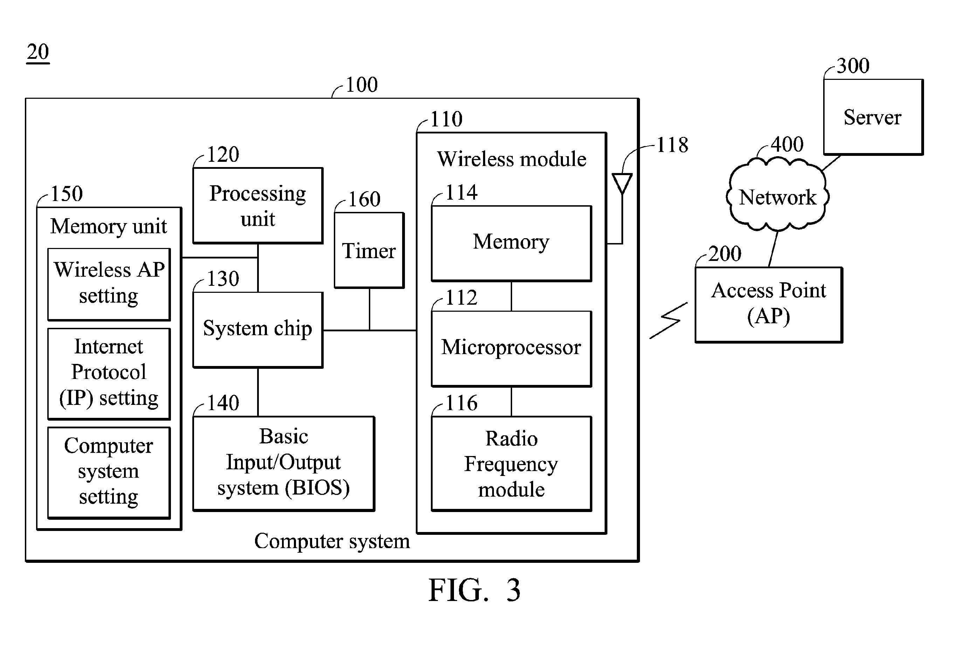

Fig. 3 is a schematic diagram illustrating another embodiment of an operation environment of the invention. As shown in Fig. 3, the operation environment 20 comprises a computer system 100 of the invention, an AP 200, a server 300 and a network 400. The computer system 100 can connect to the AP 200 and further connect to the server 300 in the network 400 through the AP 200. The server 300 connects to the network 400 for storing any update data of network content from the network 400. The computer system 100 at least comprises a wireless module 110, a processing unit 120, a system chip 130, a basic input/output system (BIOS) 140 and a memory unit 150. The processing unit 120 is coupled to the system chip 130 (e.g. a SouthBridge chip) and may through the system chip 130 to control the wireless module 110 to establish a connection with the AP 200 and obtain updated network content from the server 300.

The BIOS 140 is coupled to the system chip 130 and the wireless module 110 and can activate the processing unit 120 in response to a request from the wireless module 110.

The wireless module 110 may obtain predetermined setting defined by the computer system 100 from the OS through the system chip 130 and the BIOS 140. For example, the predetermined setting may be the wireless AP setting data, the IP setting data and/or the computer system setting data. Note that the wireless AP setting data may comprise AP related data, such as the SSID, the MAC address, the signal strength, the country code, the channel data, the security data, the authentication data of the AP and so on. The IP setting data may be an IP address data, such as IP addresses of the DHCP server, the DNS server, the WINS server, the gateway, the subnet mask and so on. The computer system setting data may be data related to a timer-triggered event schedule, a power status of the battery, the temperature, the time (e.g. data indicating whether it is on a working hour or a non-working hour), the LID angle, the system status (e.g. whether the power state of the system is in S3/S4/S5 state of the Advanced Configuration Power interface (ACPI)), the location information (which may distinguish from whether the computer system is being used indoor or outdoor) and so on. The above-mentioned setting data may assist in subsequent determination of whether to turn on the power of the processing unit 120 such that the processing unit starts connecting to the AP.

In some embodiments, before being woken up to prepare to perform a connection scan, the wireless module 110 may first check a number of certain computer system setting data, e.g. checking whether the remaining power of the battery is higher than a predetermined value, and the wireless module 110 may determine not to perform the connection scan, in stead directly enter into the standby or sleep state and wait for next timer-triggered event if certain of the computer system setting data does not match a minimum requirement.

The memory unit 150 may store a number of predetermined settings, such as the wireless AP setting data, the IP setting data and/or the computer system setting data and so on. In addition, the memory unit 150 may further store the above-mentioned preferred AP list which records data related to multiple APs to which the user has been connected.

The wireless module 110 further comprises a microprocessor 112, a memory 114 and at least one radio frequency (RF) module 116. The wireless module 110 may further include an antenna 118 and the RF module 116 may receive data from the AP 200 and transmit data to the AP 200 via the antenna 118. The microprocessor 112 can perform the management method of the present invention. To be more specific, the microprocessor 112 can control the RF module 116 to perform a connection scan for scanning whether a connection with at least one AP of the preferred AP list can be successfully established to connect to the network (e.g. Internet) 400 and confirm that whether any updated network content data is exist in the server 300 of the network 400 after the connection has been successfully established. In addition, the microprocessor 112 may obtain predetermined setting related to the system and setting data related to the network for subsequent determination. When the scanning result does not match the predetermined setting or no update data is available to be downloaded from the network 400, the processing unit 120 is still turned off. Contrarily, when the scanning result matches the predetermined setting and an update data is to be downloaded, the processing unit 120 is activated to wake up the computer system 100 to download the update data from the network 400. The RF module 116 may be any wireless communication modules, such as blue-tooth communication modules, WiFi or 3G communication modules or WLAN communication modules in compliance with the IEEE 802.1X standard, for connecting to responsive wired or wireless AP 200 to connect to the network 400 via the connected AP such that the computer system 100 may access resources on the connected network 400, e.g. the update data in the server 300 of the network 400. The AP 200 is connected to the network 400 and thus may obtain data to be updated from the server 300 via the AP 200. The network 400 may comprise, for example, wired or wireless networks, such as the Internet, WiFi or 3G wireless networks, but the invention is not limited thereto. The computer system 100 may establish a connection link with the AP 200 through the RF module 116 to connect to the network 400 and access data from the network 400. For example, if the network 400 is the Internet and the AP 200 is compatible with the IEEE802.11a standard, then the RF module 116 is a WLAN communication module compatible with the IEEE802.11a standard and the computer system 100 may establish a connection link with the AP 200 in the wireless network and perform a wireless communication through the corresponding wireless module, and then connect to the Internet at its back-end via the AP 200.

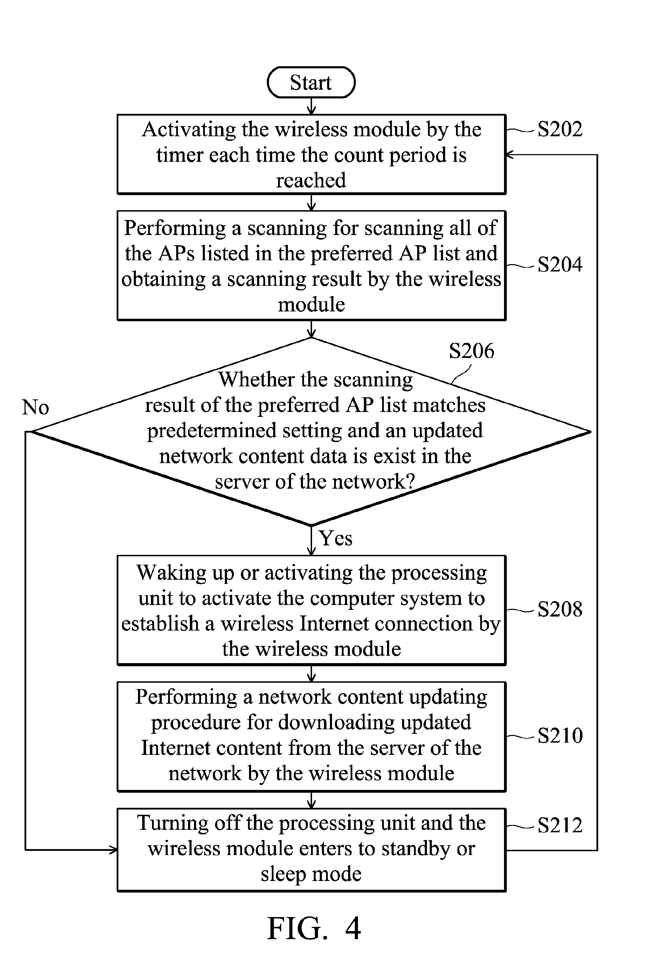

When the computer system 100 is operating in a standby, sleep or power-off state, the powers of the wireless module 110, the processing unit 120 and the BIOS 140 will have been turned off. When the computer system 100 is resumed from the standby, sleep or power-off state and enters an execution state, the powers of the wireless module 110, the processing unit 120 and the BIOS 140 have been turned on. The computer system 100 may further include a timer 160, which may configure a count period and may wake up/activate the wireless module 110 to perform a connection scan. The management method will be detailed with reference to Fig. 4.

Fig. 4 is a flowchart of another embodiment of a management method of the invention. Please refer to Figs. 3 and 4. The management method can be applied to the computer system 100 of Fig. 3 for automatically managing whether to wake up the processing unit to perform a network content updating operation. In this embodiment, it is assumed that the computer system 100 is operating in a standby, sleep or power-off state and thus the powers of the wireless module 110, the processing unit 120, the BIOS 140, and so on will have been turned off.

First, the timer 160 activates the wireless module 110 each time the count period is reached (step S202). In other words, the power of the wireless module 110 will be turned on so that the wireless module 110 is activated and can operate normally. Thereafter, the microprocessor 112 of the wireless module 110 starts performing a scan for scanning all of the APs listed in the preferred AP list and obtaining a scanning result (step S204). To be more specific, in the preferred AP list, the lower the priority value is, the higher its priority will be. Therefore, the AP with the lowest priority will be selected first to establish connection. When performing the scan, the microprocessor 112 may sequentially select the APs in the preferred AP list to connect based on the priority values of the APs in ascending order.

The microprocessor 112 then detects setting conditions including the wireless AP setting data, the IP setting data and the computer system setting data. Note that the wireless AP setting data may comprise the SSID, the MAC address, the signal strength, the country code, the channel data, the security data, the authentication data of the AP and so on. The IP setting data may be an IP address data, such as IP addresses of the DHCP server, the DNS server, the WINS server, the gateway, the subnet mask and so on. The computer system setting data may be data related to a timer-triggered event schedule, a power status of the battery, the temperature, the time (e.g. data indicating whether it is on a working hour or a non-working hour), the LID angle, the system status (e.g. whether the power state of the system is in S3/S4/S5 state of the ACPI), the location information (which may distinguish from whether the computer system is being used indoor or outdoor) and so on. In some embodiments, before the wireless module 110 is woken up to prepare to perform a connection scan, the microprocessor 112 may first check a number of certain computer system setting data and determine to start the scanning only when the certain computer system setting data matches its minimum requirement. For example, the microprocessor 112 may first check whether the remaining battery power is higher than a predetermined value, and the wireless module 110 may re-enter a standby or sleep state to wait for the next timer-triggered event when the specific computer system setting data does not match its minimum requirement, e.g. the remaining battery power is lower than the predetermined value.

Thereafter, the wireless module 110 checks whether the scanning result of the preferred AP list matches the predetermined setting and whether an updated network content data is exist in the server 300 of the network 400 (step S206). In other words, the microprocessor 112 may determine whether the scanning result matches the predetermined wireless AP setting data, IP setting data and/or computer system setting data. In some embodiments, the predetermined setting may be directly loaded to the memory 114 of the wireless module 110 before the computer system 100 changes its state from the execution state to the standby/sleep state and thus the microprocessor 112 may later directly obtain the predetermined setting from the memory 114 for comparison. In some embodiments, the microprocessor 112 may obtain the predetermined wireless AP setting data, IP setting data and computer system setting data from the memory unit 150 via the BIOS 140 after it has been woken up or it may obtain those predetermined setting by detecting the computer system 100 via the BIOS 140 after it has been woken up.

When the scanning result of the preferred AP list matches the predetermined setting and there is an updated network content data exist in the server 300 of the network 400 (Yes in step S206), the microprocessor 112 wakes up or activates the processing unit 120 to wake up the computer system 100 to establish a wireless Internet connection (step S208) and performs a network content updating procedure to download the updated Internet content data from the server 300 of the network 400 (step S210). Therefore, latest Internet content can be automatically updated to the computer system 100 before the user manually turns on the computer system 100.

After the update of the Internet content has been completed, the power of the processing unit 120 is turned off once again such that the computer system 100 enters suspend or shut down procedure and the wireless module 110 re-enters to the standby or sleep state to wait for next timer-triggered event (step S212).

Contrarily, when the scanning result of the preferred AP list does not match the predetermined setting (No in step S206), the wireless module 110 directly enters the standby or sleep state to wait for next timer-triggered event (step S212). That is, when the scanning result does not match the predetermined setting or no update data is available to be downloaded from the network 400, the microprocessor 112 of the wireless module 110 will not wake up or activate the processing unit 120 to activate the computer system 100 via the BIOS 140, thus efficiently saving power.

In some embodiments, the wireless module 110 may further comprise a plurality of RF modules and may select any of the RF modules in the wireless module 110 to attempt to establish the connection according to a specific rule during the performance of the scan. For example, the wireless module 110 may comprise a 3G RF module and a WLAN RF module, wherein the WLAN RF module which saves more power than the 3G RF module is first selected to attempt to establish the connection with APs in its responsive preferred AP list during the connection test and the 3G RF module may further be selected to attempt to establish the connection with APs in its responsive preferred AP list after the connection establishment for the WLAN RF module is failed. In some embodiments, the 3G RF module and the WLAN RF module may exchange signals between each other via the BIOS 140 or may directly exchange signals between each other without going through any other modules.

In sum, with the computer systems and related management methods of the invention, when each count period has been reached, only the wireless module is woken up first to perform the scanning and detection while the processing unit is not be woken up or activated, wherein the processing unit is woken up or activated only when the specific conditions have been met and the Internet has update data, which is different from the traditional computer system that wakes up or activates its processing unit during each count period and results in additional power consumption, thus avoiding unnecessary power consumption. In addition, the computer systems and related management methods of the invention can provide a number of RF modules with different type of service networks to increase the probability of a successful connection and have priority in selecting the connection mode that saves the most power, thereby further reducing unnecessary power consumption.

Management methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A management method for use in a computer system, wherein the computer system includes a wireless module (110) and a processing unit (120) which are turned off, the method comprising:
during each count period, activating the wireless module to scan at least one access point (AP) (S102) to obtain a scanning result, wherein the processing unit is turned off during performing the scanning;
determining, by the wireless module (S104) , whether to activate the processing unit to wake up the computer system to download an update data from a network according to the scanning result and a predetermined setting;
wherein the processing unit and the wireless module are turned off when the scanning result does not match the predetermined setting or no update data is available to be downloaded from the network, and the processing unit is activated to wake up the computer system to download the update data from the network when the scanning result matches the predetermined setting and an update data is to be downloaded.

2. The management method of claim 1, further comprising:
turning off the processing unit and the wireless module after the download of the update data has been completed.

3. The management method of claim 1 or 2, wherein the predetermined setting comprises at least one of a wireless AP setting data, a IP setting data and a computer-hardware setting data corresponding to the computer system.

4. The management method of any of the claims 1 to 3, wherein the wireless module further selects the at least one AP from a preferred AP list to perform the scanning, wherein the preferred AP list comprises a plurality of APs.

5. The management method of any of the claims 1 to 4, wherein the wireless module further comprises a first RF module and a second RF module, and the first and second RF modules sequentially perform the scanning according to a specific sequence.

6. A computer system (100), comprising:
a wireless module (110), having a microprocessor and a radio frequency (RF) module;
a timer (160), activating the wireless module to scan at least one access point (AP) to obtain a scanning result through the RF module during each count period; and
a processing unit (120), the processing unit being turned off and capable of waking up the computer system to download an update data from a network;
wherein the microprocessor determines whether to activate the processing unit to wake up the computer system to download an update data from a network according to the scanning result and a predetermined setting;
wherein when the scanning result does not match the predetermined setting or no update data is available to be downloaded from the network, the microprocessor does not activate the processing unit, and when the scanning result matches the predetermined setting and an update data is to be downloaded, the processing unit activates the processing unit to wake up the computer system to download the update data from the network.

7. The computer system of claim 6, wherein the wireless module further comprises a memory and the predetermined setting is stored to the memory of the wireless module prior to turning off the processing unit.

8. The computer system of claim 6 or 7, further comprising a basic input/output system (BIOS), wherein the microprocessor obtains the predetermined setting by detecting the computer system through the BIOS, and the microprocessor activates the processing unit through the BIOS.

9. The computer system of any of the claims 6 to 8, wherein the processing unit and the wireless module are turned off after the download of the update data has been completed.

10. The computer system of any of the claims 6 to 9, wherein the predetermined setting comprises at least one of a wireless AP setting data, a IP setting data and a computer-hardware setting data corresponding to the computer system.

11. The computer system of any of the claims 6 to 10, wherein the wireless module further comprises a first RF module and a second RF module, and the first and second RF modules sequentially perform the scanning according to a specific sequence.
